(19) Europäisches Patentamt
European Patent Office
Office européen des brevets

(11) Publication number: **0 250 945 B1**

# EUROPEAN PATENT SPECIFICATION

(45) Date of publication of patent specification: **23.10.91**

(51) Int. Cl.5: **A01G 9/02**

(21) Application number: **87108279.8**

(22) Date of filing: **09.06.87**

(54) Large vase for plants.

(30) Priority: **20.06.86 IT 380686 U**

(43) Date of publication of application:
**07.01.88 Bulletin 88/01**

(45) Publication of the grant of the patent:
**23.10.91 Bulletin 91/43**

(84) Designated Contracting States:
**AT BE CH DE ES FR GB GR IT LI LU NL SE**

(56) References cited:
**AT-B- 316 914**
**DE-U- 7 714 087**
**US-A- 4 324 070**

(73) Proprietor: **BELLITALIA S.r.l.**
**Viale Cadore 7**
**I-32014 Ponte Nelle Alpi (Belluno)(IT)**

(72) Inventor: **Zilli, Achille**
**Via F.lli Rosselli**
**I-32100 Belluno(IT)**

(74) Representative: **Modiano, Guido et al**
**MODIANO, JOSIF, PISANTY & STAUB**
**Modiano & Associati Via Meravigli, 16**
**I-20123 Milano(IT)**

## Description

The present invention relates to a large pot for plants.

Currently, in decorating and adorning, for example, squares, monuments, gardens and avenues, where the natural soil of flower-beds is not employed, large pots are often used, provided in a single casting on the spot or in any case prefabricated monolithically employing concrete or similar material.

Such large prefabricated pots currently in use have a series of disadvantages and limitations which condition their development from a productive and commercial point of view.

The first disadvantage resides in the fact that they are difficult to transport and to position, so that there is a constant trend towards the use of pots having the smallest possible dimensions so as to simultaneously contain weight.

Another disadvantage of current large pots resides in the fact that since they are intended to contain plants and flowers, presence of holes to drain off excess water is necessary: this accordingly requires a frequent irrigation of the soil to prevent its drying due to the impossibility to adjust the water drainage through said holes.

Another existing disadvantage is due to the poor aesthetics of the monolithic prefabricated pot, which makes troublesome its use and its harmonization with the locations where it is installed.

To partially solve some of the above-mentioned disadvantages associated with monolithic prefabricated pots, prior art document AT-B-316 914 shows a pot which is comprised of separate smaller parts which are assembled to thereby form the larger pot. However, the pot according to this document suffers the disadvantages of providing unsatisfactory support for the assembled pot, as well as offering a poor aesthetic appearance which compromises its' use and harmonization with its surroundings.

The aim of the present invention is therefore to eliminate the above disadvantages of the prior art, by providing a large pot for flowers and/or plants, easy to transport and to install.

Within this aim, an important object consists of providing a large pot which, further to the preceding features, is optimally installable also on uneven ground, which is thus not perfectly planar.

Still another object is to provide a large pot which allows optimum aeration of the soil contained therein.

Another important object is to provide a large pot which simultaneously allows accumulation of water, forming a reserve for plants, and draining thereof in case of excessive amounts, for example due to remarkable or long-lasting atmospheric precipitations.

Not least object is to provide a large pot which has limited costs, while allowing manufacture with usual known devices and machines.

The above aim and objects, as well as others which will become apparent hereinafter, are achieved by a large pot for plants as claimed in the appended claims.

Further features and advantages of the invention will become apparent from the detailed description of three different embodiments, illustrated only by way of non-limitative example in the accompanying drawings, wherein:

Fig. 1 is a perspective view, in partial cross section, of the pot base;

Fig. 2 is a view, similar to the preceding one, of the first containment element;

Fig. 3 is a view, similar to the preceding ones, of the spacer;

Fig. 4 is a view, similar to the preceding ones, of the second containment element;

Fig. 5 is a top view of the pot;

Fig. 6 is a cross-sectional view taken along plane VI-VI of fig. 5;

Fig. 7 is a view, similar to the preceding one, of a second embodiment;

Fig. 8 is a top view of this second embodiment;

Fig. 9 is a view, similar to the one of fig. 3, of the spacer used in said second embodiment;

Fig. 10 is a view, similar to those of figs. 2 and 4, of the second containment element used in the second embodiment; and

Fig. 11 is a view, similar to the ones of figs. 6 and 7, of a third embodiment.

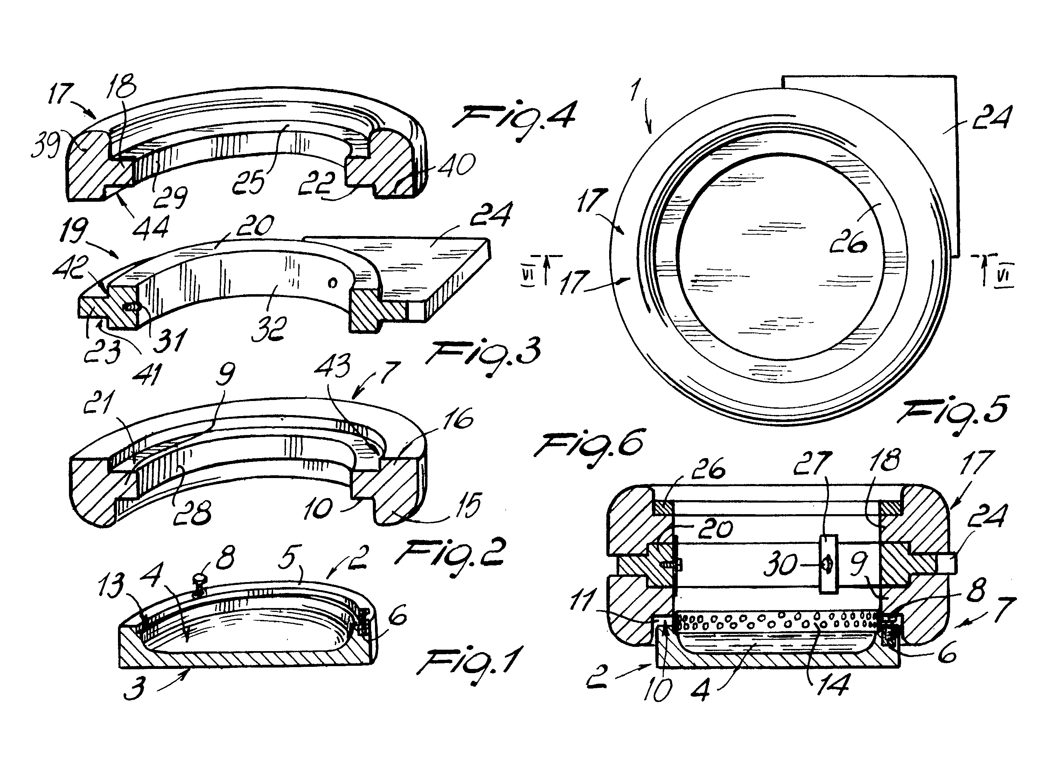

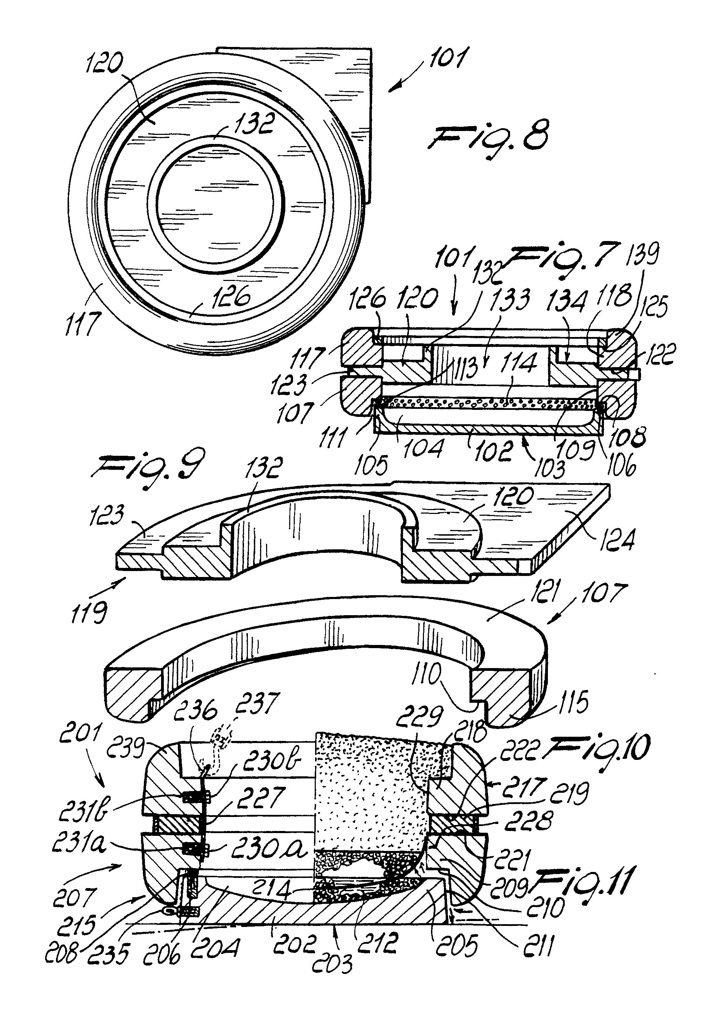

With reference to the above described figures, the pot, indicated by the reference numeral 1, comprises a base 2, in the shape of a cylinder and having a planar surface 3 for resting on the ground and a central recess 4 defining an upper annular planar shoulder 5.

With the upper annular shoulder 5 are associable, through suitable first bushes 6 embedded therein, level adjusting means for adjusting the horizontal arrangement of a first containment element 7 arrangeable above the base 2.

This level adjustment means comprises first bolts 8, the heads whereof projects in the direction of the overlying first containment element 7.

The latter has an essentially annular shape with a T-shaped transverse cross section defining a first stem 9 projecting inside the element 7 and having such a length as to define, when its lower lateral surface 10 rests on the underlying bolts 8, an interspace 11 suitable to allow both passage of air from outside to the interior of the vase and outflow of water, contained in the recess 4, from the vase if the water rises above the annular shoulder 5 of the base 2.

At the inner perimetral edge of the upper annular shoulder 5 of this base, a step 13 is furthermore provided, for supporting a water filtering means consisting of a circular drilled tray 14, having the same diameter as the base 2 at the step 13.

The first containment element 7 furthermore comprises a first, lower, rounded portion 15 facing the underlying base 2 and a second, upper, planar portion 16.

The vase 1 also comprises a second containment element 17, equal to the first containment element 7, both being obtainable from the same casting.

Thus, also the second containment element 17 has an annular shape with a second stem 18 protruding inside the vase, the second element 17 being coupled to the first element 7 by arranging them mutually juxtaposed. Furthermore, the second containment element 17 has a lower planar portion 40 corresponding to portion 16 and an upper rounded portion 39 corresponding to portion 15.

Between the two containment elements, a variable height spacer 9 may be interposed, including a first ring 20 resting on the upper lateral surface 21 of the first stem 9 and at the corresponding lower lateral surface 22 of the second stem 18, the radial thickness of the ring being equal to the length of the stems.

An annular tab 23 projects radially and externally to the ring 20 so as to extend between the second planar portion 16 of the first containment element 7 and the corresponding portion 40 of the second containment element 17. Thus the tab 23 defines, together with the ring 20, two steps 41, 42, cooperating with respective countershaped steps 43, 44 formed by the planar portions 16 and 40 with the stems 9 and 18 of the containment elements, so as to center these elements 7 and 17 and prevent them from getting offset.

Advantageously, the annular tab presents a projecting portion 24 extending approximately along one quarter of the circumference of the ring 20 and having a substantially triangular shape.

The upper lateral surface 25 of the second stem 18 may support a second ring 26 having a radial thickness equal to the radial extension of the lateral surface 21.

The containment elements and the spacer 19 cooperate with means for improving their mutual centering, consisting of a plurality of brackets 27 arranged approximately parallel to the central axis of the vase 1 and having such a length as to span the entire height of the innerwall 32 of the ring 20 and partially the lateral walls 28 and 29 respectively of the stems 9 and 18.

Each bracket 27 is drilled, and a locking means, comprising second bolts 30 associable with suitable second bushes 31, embedded in the inner wall 32 of the ring, 20 is associable therewith.

Manufacture and use of the large pot for plants is therefore as follows: after forming the various components individually, with the first and second containment elements requiring a same mold, they may be transported, unassembled, to the location of use.

It is subsequently easily possible to assemble the pot, initially by positioning the base 2 and, above it, the tray 14, the first containment element 7, the spacer 19, the second containment element 17, and the second ring 26.

The presence of the first bolts 8 allows, by screwing or unscrewing them, for example before positioning of the first element 7, to create resting points for the latter, which thus may arrange itself perfectly horizontal, regardless of any unevenness of the ground.

The insertion of the tray 14 allows optimum draining of the water in the recess 4, which water can flow out of the vase through the interspace 11.

The use of the brackets 27 allows optimum centering of the containment elements as well as the spacer 19.

Thus the large pot for plants according to the invention achieves the intended aim and objects, being easy transportable and installable even on uneven ground, and simultaneously allowing storage of reserve water for the plants, optimum aeration of the soil contained therein, and draining of excess water from its interior.

Naturally, the invention thus conceived is susceptible to numerous modifications and variations, all within the scope of the same inventive concept.

Thus, for example, figs. 7-10 illustrate a second embodiment of a pot 101, also comprising a base 102 having a recess 104 defining an Upper planar annular shoulder 105, and supporting a tray 114 together with a first containment element 107 by virtue of the presence of the first bolts 108 accommodated in bushes 106 provided in the shoulder 105.

Also in this case, the dimensions of the base 102 and of the first containment element allow to define an interspace 111 therebetween, and the base 102 has a planar surface 103 for resting on the ground. Similarly to the first embodiment, the first containment 107 comprises a first rounded portion 115 and a first stem 109 which defines a lower lateral surface 110 for resting on the bolts 108. Additionally, the second containment element 117 comprises a second rounded portion 139 and a second stem 118 which defines an upper stem surface 125.

This second embodiment differs from the preceding one for the containment elements 107 and 117 are L-shaped in cross-section and have their respective facing portions 121 and 122 planar and level with the respective stems 109 and 118.

An annular tab 123, extending between the facing portions 121 and 122, radially projects from the first ring 120 defining the spacer 119, this first ring projecting toward the interior of the pot and being provided, at its end opposite to the tab 123 with a circular shoulder 132 projecting towards the second containment element 117.

A second ring 126 is also associated with the latter.

Thus, in this embodiment a first seat 133 is defined for the accommodation, for example, of a main plant as well as a second seat 134, concentric to the previous one, for example for accomodating small flowers and other plants.

The function of the tray 114 remains that of preventing escape of the soil from recess 104, allowing, at the same time, outflow of water.

Fig. 11 illustrates a third embodiment of a pot 201 which is provided, at the base 202, with a pot moving means, comprising a ring-bolt 235 radially associated with the base below the first portion 215 of the first containment element 207.

Similarly to the first and second embodiments, the pot according to the third embodiment comprises a first containment element 207 having a first rounded portion 215 and a first stem 209 defining a lower lateral surface 210 which rests upon leveling bolt means 208 accommodated in first bushes 206 provided in an upper planar shoulder 205 of the base 202. The second containment element 217 has a second rounded portion 239 and a second stem 218, and the base 202 has a lower planar surface 203.

In this particular embodiment, the spacer 219 is constituted by an annular cylindrical ring which is interposed, when the pot is assembled, between a lower facing portion 222 of the second containment element 217 and an upper facing portion 221 of the first containment element 207.

In this embodiment, the water filtering means comprises a fabric sheet 214 intended to prevent passage of the soil to the underlying recess 204 but such as to allow passage of water 212 therethrough.

The brackets 227 are furthermore rigidly associated, by means of suitable second bolts 230a and 230b, with suitable second bushes 231a and 231b provided at the lateral walls 228 and 229 of the first containment element 207 and of the second containment element 217.

Each bracket 227 furthermore presents an ear 236 having a hole allowing, for example through a suitable hook 237, partial transfer of the first and second containment elements and of the spacer.

Naturally, the materials, as well as the dimensions of the individual components of the vase, may be the most appropriate according to the specific requirements.

**Claims**

1. Large pot for plants, comprising a spacer (19,119,219) being interposable between a first containment element (7,107,207) and a second containment element (17,117,217), a base (2,102,202) supporting the first containment element (7,107,207), and level adjustment means (8,108,208) for horizontally leveling the pot with respect to an unhorizontal support surface of the pot, characterized in that the base (2,102,202) has a lower planar surface (3,103,203) which rests upon the support surface of the pot, the level adjustment means (8,108,208) being arranged between the base (2,102,202) and the first containment element (7,107,207) so that the first containment element (7,107,207) with the spacer (19,119,219) and second containment element (17,117,217) associated thereto can achieve a horizontal leveling while the planar surface (3,103,203) of the base (2,102,202) remains level with the support surface of the pot, the pot further comprising water filtering means (14,114,214) being provided in a recess (4,104,204) of the base (2,102,202) between the base (2,102,202) and the first containment element (7,107,207).

2. Pot according to claim 1, characterized in that the base (2,102,202) has a cylindrical shape with a central recess (4,104,204) defining an upper planar shoulder (5,105,205) in which are embedded first bushes (6,106,206), the level adjustment means comprising first bolts (8,108,208) being accommodated in the first bushes (6,106,206), the first containment element (7,107,207) having an annular shape and comprising a first stem (9,109,209) projecting inwardly and a first rounded portion (15,115,215) projecting downwardly, a lower lateral surface (10,110,210) being defined on the inwardly projecting first stem (9,109,209) of the first containment element (7,107,207), the lower lateral surface (10,110,210) resting on the first bolts (8,108,208) when the first containment element (7,107,207) is placed upon and supported by the base (2,102,202), the cylindrically shaped base (2,102,202) and the annularly shaped first containment element (7,107,207) having mutually relative dimensions such that an interspace (11,111,211) is defined between the first containment element (7,107,207) and the base (2,102,202) when the lower lateral surface (10,110,210) rests upon the first bolts (8,108,208) , the interspace (11,111,211) simultaneously acting as a discharge passage of excess water and an aeration passage for soil contained in the pot.

3. Pot according to claim 2, characterized in that the first containment element (7) further comprises a first planar portion (16) extending upwardly and, together with the inwardly projecting first stem (9), defines an upper first containment element step (43), the spacer (19) having an annular shape with a T-shaped transverse cross section comprised of a first ring (20) and an outer annular tab (23), the first ring (20) and the outer annular tab (23) defining a lower spacer step (41) and an upper spacer step (42), the second containment element (17) having an annular shape and comprising a second stem (18) projecting inwardly, a second rounded portion (39) projecting upwardly and a second planar portion (40) projecting downwardly, a lower second containment element step (44) being defined by the inwardly projecting second stem (18) and the downwardly projecting second planar portion (40), the first containment element (7), the spacer (19), and the second containment element (17) all having mutual relative dimensions such that when the pot is assembled the lower second containment element step (44) is accommodated in the upper spacer step (42), the upper first containment element step (43) is accommodated in the lower spacer step (41), and a mutual centering of the first containment element (7), the spacer (19) and the second containment element (17) is thereby achieved.

4. Pot according to claim 3, characterized in that the inwardly projecting second stem (18) of the second containment element defines an upper stem surface (25), the pot further comprising a second ring (26) resting on the upper stem surface (25) and brackets (27) being bolted to the first ring inner wall (32) by means of second bolts (30) accommodated in second bushes (31), the brackets (27) having a length which spans the entire height of the first ring inner wall (32) and partially the inner lateral walls (28,29) of the first stem (9) and the second stem (18) to provide additional centering and position retention of the first containment element (7), the spacer (19) and the second containment element (17).

5. Pot according to claim 2, characterized in that the first containment element (107) has an L-shaped cross section defining an upper facing portion (121), the second containment element (117) having an L-shaped cross section comprising a second rounded portion (139) and a second stem (118) defining a lower facing portion (122), the spacer (119) comprising an first ring (120) and an outer annular tab (123), the outer annular tab (123) extending between the upper facing portion (121) and the lower facing portion (122) when the first containment element (107), the spacer (119), and the second containment element (117) are assembled to form the pot, the first ring (120) of the spacer (119) projecting inwardly toward the pot interior and further being provided with a circular shoulder (132) projecting upwardly in the pot interior, a first inner circular seat (133) and a second outer annular seat (134) being defined by the spacer first ring (120) and the circular shoulder (132) of the spacer (119), the pot further comprising a second ring (126) resting upon an upper stem surface (125) of the second stem (118) of the second containment element (117).

6. Pot according to claims 4 or 5, characterized in that the water filtering means are constituted by a circular drilled tray (14,114) accommodated in a step (13,113) provided at the upper end of the recess (4,104) of the base (2,102), the outer annular tab (23,123) of the spacer (19,119) further being provided with a projecting portion (24,124) extending approximately along one quarter of the circumference of the first ring (20,120) and having a substantially triangular shape.

7. Pot according to claim 2, characterized in that the first containment element (207) has an L-shaped cross section defining an upper facing portion (221), the second containment element (217) having an L-shaped cross section comprising a second rounded portion (239) and a second stem (218) defining a lower facing portion (222), the spacer (219) being constituted by an annular circular ring which is interposed between the upper facing portion (221) and the lower facing portion (222) when the first containment element (207), the spacer (219) and the second containment element (217) are assembled to form the pot, the pot further comprising brackets (227) being rigidly associated to lateral walls (228,229) of the first and second containment elements (207,217) by means of second bolts (230a,230b) accommodated in second bushes (231a,231b), the brackets (227) having ears (236) with holes through which transfer hook means (237) are insertable for at least a partial transfer of the first and second containment elements (207,217) and the spacer (219), the pot further comprising pot moving means being constituted by a ring-bolt (235) being radially associated with the base (202) below the first rounded portion (215) of the first containment element (207), the water filtering means being constituted by a fabric sheet (214).

8. Pot according to any one of the preceding claims, characterized in that the first containment element (7,107,207) and the second containment element (17,117,217) are identically shaped and made from the same mold.

**Revendications**

1. Grand vase pour des plantes, comprenant une entretoise (19,119,219) disposée entre un premier élément de retenue (7,107,207) et un second élément de retenue (17,117,217), une base (2,102,202) supportant le premier élément de retenue (7,107,207), et des moyens de réglage du niveau (8,108,208) pour la mise à niveau horizontalement du vase par rapport à une surface de support non horizontal du vase, caractérisé en ce que la base (2,102,202) a une surface plane inférieure (3,103,203) qui repose sur la surface de support du vase, les moyens de réglage du niveau (8,108,208) étant agencés entre la base (2,102,202) et le premier élément de retenue (7,107,207), de sorte que le premier élément de retenue (7,107,207) avec l'entretoise (19,119,219) et le second élément de retenue (17,117,217), associé à celle-ci, peuvent réaliser une mise à niveau horizontalement, tandis que la surface plane (3,103,203) de la base (2,102,202) reste au niveau de la surface de support du vase, le vase comprenant, de plus, des moyens de filtration de l'eau (14,114,214) prévus dans un évidement (4,104,204) de la base (2,102,202), entre la base (2,102,202) et le premier élément de retenue (7,107,207).

2. Vase selon la revendication 1, caractérisé en ce que la base (2,102,202) présente une forme cylindrique avec un évidement central (4,104,204) définissant un épaulement plan supérieur (5,105,205), dans lequel sont noyées des premières douilles (6,106,206), les moyens de réglage du niveau comprenant des premiers boulons (8,108,208) agencés dans les premières douilles (6,106,206), le premier élément de retenue (7,107,207) ayant une forme annulaire et comprenant un premier rebord (9,109,209) faisant saillie intérieurement et une première partie arrondie (15,115,215) faisant saillie vers le bas, une surface latérale inférieure (10,110,210) étant définie sur le premier rebord faisant saillie vers l'intérieur (9,109,209) du premier élément de retenue (7,107,207), la surface latérale inférieure (10,110,210) reposant sur les premiers boulons (8,108,208) quand le premier élément de retenue (7,107,207) est placée sur et supportée par la base (2,102,202), la base de forme cylindrique (2,102,202) et le premier élément de retenue de forme annulaire (7,107,207) ayant mutuellement des dimensions relatives telles qu'un jeu (11,111,211) est défini entre le premier élément de retenue (7,107,207) et la base (2,102,202) quand la surface latérale inférieure (10,110,210) repose sur les premiers boulons (8,108,208), le jeu (11,111,211) agissant simultanément comme un passage d'évacuation de l'eau en excès et comme un passage d'aération pour la terre contenue dans le vase.

3. Vase selon la revendication 2, caractérisé en ce que le premier élément de retenue (7) comprend de plus une première partie plane (16) s'étendant vers le haut et, avec le premier rebord faisant saillie intérieurement (9), définit un gradin supérieur (43), l'entretoise (19) ayant une forme annulaire avec une section transversale en forme de T constituée d'une première bague (20) et d'une patte annulaire externe (23), la première bague (20) et la patte annulaire externe (23) définissant un gradin inférieur (41) et un gradin supérieur (42), le second élément de retenue (17) ayant une forme annulaire et comprenant un second rebord (18) faisant saillie intérieurement, une seconde partie arrondie (39) faisant saillie vers le haut et une seconde partie plane (40) faisant saillie vers le bas, un gradin inférieur (44) étant défini par le second rebord faisant saillie intérieurement (18) et la seconde partie plane faisant saillie vers le bas (40), le premier élément de retenue (7), l'entretoise (19), et le second élément de retenue (17) ayant tous des dimensions relatives réciproques telles que, quand le vase est assemblé, le gradin inférieur (44) du second élément de retenue est agencé dans le gradin supérieur (42), le gradin supérieur (43) du premier élément de retenue est agencé dans le gradin inférieur (41), et un centrage mutuel du premier élément de retenue (7), de l'entretoise (19), et du second élément de retenue (17) est ainsi réalisé.

4. Vase selon la revendication 3, caractérisé en ce que le second rebord faisant saillie intérieurement (18) du second élément de retenue définit une surface de rebord supérieure (25), le vase comprenant de plus une seconde bague (26) reposant sur la surface du rebord supérieure (25) et des supports (27) étant fixés à la paroi interne de la première bague (32) au moyen de seconds boulons (30) agencés dans des secondes douilles (31), les supports (27) ayant une longueur qui couvre la hauteur totale de la paroi interne de la première bague (32) et, partiellement, les parois latérales internes (28,29) du premier rebord (9) et du second rebord (18) pour fournir un centrage additionnel et un maintien en position du premier élément de retenue (7), de l'entretoise (19), et du second élément de retenue (17).

5. Vase selon la revendication 2,
   caractérisé en ce que le premier élément de retenue (107) présente une section transversale en forme de L définissant une partie frontale supérieure (121), le second élément de retenue (117), ayant une section transversale en forme de L, comprenant une seconde partie arrondie (139) et un second rebord (118) définissant une partie frontale inférieure (122), l'entretoise (119) comprenant une première bague (120) et une patte annulaire externe (123), la patte annulaire externe (123) s'étendant entre la partie frontale supérieure (121) et la partie frontale inférieure (122) quand le premier élément de retenue (107), l'entretoise (119), et le second élément de retenue (117) sont assemblés pour former le vase, la première bague (120) de l'entretoise (119) faisant saillie intérieurement vers l'intérieur du vase et étant de plus munie d'un épaulement circulaire (132) faisant saillie vers le haut dans l'intérieur du vase, un premier siège circulaire interne (133) et un second siège annulaire externe (134) étant définis par la première bague (120) et l'épaulement circulaire (132) de l'entretoise (119), le vase comprenant de plus une seconde bague (126) reposant sur une surface supérieure (125) du second rebord (118) du second élément de retenue (117).

6. Vase selon les revendications 4 ou 5,
   caractérisé en ce que les moyens de filtration de l'eau sont constitués par une cuvette perforée circulaire (14,114) agencés dans un gradin (13,113) prévu à l'extrémité supérieure de l'évidement (4,104) de la base (2,102), la patte annulaire externe (23,123) de l'entretoise (19,119) étant de plus munie d'une partie en saillie (24,124) s'étendant approximativement sur un quart de la circonférence de la première bague (20,120) et ayant une forme sensiblement triangulaire.

7. Vase selon la revendication 2,

caractérisé en ce que le premier élément de retenue (207) présente une section transversale en forme de L définissant une partie frontale supérieure (221), le second élément de retenue (217) ayant une section transversale en forme de L comprenant une seconde partie arrondie (239) et un second rebord (218) définissant une partie frontale inférieure (222), l'entretoise (219) étant constituée par une bague circulaire annulaire qui est disposée entre la partie frontale supérieure (221) et la partie frontale inférieure (222) quand le premier élément de retenue (207), l'entretoise (219), et le second élément de retenue (217) sont assemblés pour former le vase, le vase comprenant de plus des supports (227) associés rigidement aux parois latérales (228,229) des premier et second éléments de retenue (207, 217) au moyen de seconds boulons (230a,230b) agencés dans des secondes douilles (231a,231b), les supports (227) ayant des oreilles (236) à trous à travers lesquels des moyens d'accrochage (237) sont susceptibles d'être insérés pour au moins un déplacement partiel des premier et second éléments de retenue (207,217) et de l'entretoise (219), le vase comprenant de plus des moyens de déplacement constitués par un piton (235) associé radialement à la base (202) en dessous de la première partie arrondie (215) du premier élément de retenue (207), les moyens de filtration de l'eau étant constitués par un morceau de tissu (214).

8. Vase selon l'une quelconque des revendications précédentes,
   caractérisé en ce que le premier élément de retenue (7,107,207) et le second élément de retenue (17,117,217) sont de forme identique et réalisés à partir du même moule.

## Patentansprüche

1. Großer Topf für Pflanzen, mit einem zwischen einem ersten Behälterelement (7, 107, 207) und einem zweiten Behälterelement (17, 117, 217) einsetzbaren Abstandselement (19, 119, 219), einer das erste Behälterelement (7, 107, 207) halternden Basis (2, 102, 202), sowie Niveauregulierungseinrichtungen (8, 108, 208) zum horizontalen Ausrichten des Topfes gegenüber einer nicht horizontalen Untergrundoberfläche des Topfes, dadurch gekennzeichnet, daß die Basis (2, 102, 202) eine untere ebene Oberfläche (3, 103, 203) aufweist, die auf der Untergrundoberfläche des Topfes aufliegt, die Niveauregulierungsmittel (8, 108, 208) zwischen der Basis (2, 102, 202) und dem ersten Behälterelement (7, 107, 207) angeordnet sind, so daß das erste Behälterelement (7, 107, 207) mit dem Abstandselement (19, 119, 219) und dem zugeordneten zweiten Behälterelement (17, 117, 217) eine horizontale Ausrichtung erreichen kann, während die ebene Oberfläche (3, 103, 203) der Basis (2, 102, 202) mit der Untergrundoberfläche des Topfes ausgerichtet bleibt, und daß der Topf weiterhin Wasserfiltermittel (14, 114, 214) aufweist, die in einer Ausnehmung (4, 104, 204) der Basis (2, 102, 202) zwischen der Basis (2, 102, 202), und dem ersten Behälterelement (7, 107, 207) vorgesehen sind.

2. Topf nach Anspruch 1, dadurch gekennzeichnet, daß die Basis (2, 102, 202) Zylinderform mit einer zentralen Ausnehmung (4, 104, 204) aufweist, die eine obere ebene Schulter (5, 105, 205) bildet, in der erste Buchsen (6, 106, 206) eingebettet sind, daß die Niveauregulierungsmittel erste Bolzen (8, 108, 208) umfassen, die in den ersten Buchsen (6, 106, 206) aufgenommen sind, daß das erste Behälterelement (7, 107, 207) Ringform aufweist und einen ersten nach innen vorspringenden Schaft (9, 109, 209) und einen ersten nach unten vorspringenden abgerundeten Abschnitt (15, 115, 215) aufweist, eine untere seitliche Oberfläche (10, 110, 210) an dem nach innen vorspringenden ersten Schaft (9, 109, 209) des ersten Behälterelements (7, 107, 207) gebildet ist, die untere seitliche Oberfläche (10, 110, 210) auf den ersten Bolzen (8, 108, 208) ruht, wenn das erste Behälterelement (7, 107, 207) auf die Basis (2, 102, 202) gelegt und von dieser gehalten wird, die zylindrisch geformte Basis (2, 102, 202) und das ringförmig ausgebildete erste Behälterelement (7, 107, 207) derart aufeinander abgestimmte Abmessungen aufweisen, daß ein Zwischenraum (11, 111, 211) zwischen dem ersten Behälterelement (7, 107, 207) und der Basis (2, 102, 202) gebildet ist, wenn die untere seitliche Oberfläche (10, 110, 210) auf den ersten Bolzen (8, 108, 208) liegt, wobei der Zwischenraum (11, 111, 211) gleichzeitig als ein Entladedurchgang für überschüssiges Wasser und als Belüftungsdurchgang für in dem Topf enthaltene Erde dient.

3. Topf nach Anspruch 2, dadurch gekennzeichnet, daß das erste Behälterelement (7) weiterhin einen sich nach oben erstreckenden und zusammen mit dem nach innen ragenden ersten Schaft (9) eine Stufe (43) des ersten Behälterelements bildenden ebenen Abschnitt (16) umfaßt, das Abstandselement (19) Ringform mit einem T-förmigen Querschnitt, bestehend aus einem ersten Ring (20) und einem äußeren ringförmigen Ansatz (23) aufweist, der erste Ring (20) und der äußere ringförmige Ansatz (23) eine untere Abstandsstufe (21) und eine obere Abstandsstufe (42) bilden, das zweite Behälterelement (17) Ringform aufweist und einen zweiten nach innen ragenden Schaft (18), einen zweiten nach oben vorspringenden abgerundeten Abschnitt (39) und einem zweiten nach unten vorspringenden ebenen Abschnitt (40) aufweist, eine untere Stufe (44) des zweiten Behälterelements von dem nach innen vorspringenden zweiten Schaft (18) und dem nach unten vorspringenen zweiten ebenen Abschnitt (40) gebildet wird, das erste Behälterelement (7), das Abstandselement (19) und das zweite Behälterelement (17) jeweils derartige gegenseitige Abmessungen aufweisen, daß bei zusammengesetztem Topf die untere Stufe (44) des zweiten Behälterelements in der oberen Abstandsstufe (42) untergebracht ist, die obere Schulter (43) des ersten Behälterelements in der unteren Abstandsstufe (41) untergebracht ist, und daß dadurch eine wechselseitig Zentrierung des ersten Behälterelements (7), des Abstandselements (19) und des zweiten Behälterelements (17) erreicht wird.

4. Topf nach Anspruch 3, dadurch gekennzeichnet, daß der nach innen vorspringende zweite Schaft (18) des zweiten Behälterelements eine obere Schaftoberfläche (25) bildet, der Topf weiterhin einen zweiten Ring (26) aufweist, der auf der oberen Schaftoberfläche (25) aufruht, und Klammern (27) an der Innenwand (32) des ersten Rings mit Hilfe von zweiten Bolzen (30) festgeschraubt sind, die in zweiten Buchsen (31) angeordnet sind, wobei die Klammern (27) eine Länge aufweisen, die die gesamte Höhe der Innenwand (32) des ersten Rings und teilweise die inneren Seitenwände (28, 29) des ersten Schafts (29) und des zweiten Schafts (18) überspannt, zur Schaffung einer zusätzlichen Zentrierung und Positionssicherung des ersten Behälterelements (7), des Abstandselements (19) und des zweiten Behälterelements (17).

5. Topf nach Anspruch 2, dadurch gekennzeichnet, daß das erste Behälterelement (107) einen L-förmigen Querschnitt mit einem oberen Stirnabschnitt (122) aufweist, das zweite Behälterelement (17) einen L-förmigen Querschnitt mit einem zweiten abgerundeten Abschnitt (139) und einem zweiten Schaft (118) aufweist, der einen unteren Stirnabschnitt (122) bildet, das Abstandselement (119) einen ersten Ring (120) und einen äußeren ringförmigen Absatz (123) aufweist, der sich zwischen dem oberen Stirnabschnitt (121) und dem unteren Stirnabschnitt (122) erstreckt, wenn das erste Behälterelement (107), das Abstandselement (119) und das zweite Behälterelement (117) zur Bildung des Topfes zusammengesetzt sind, der erste Ring (120) des Abstandselementes (119) nach innen in Richtung auf das Topfinnere vorspringt und weiterhin mit einer kreisförmigen Schulter (132) versehen ist, die nach oben in das Topfinnere vorspringt, ein erster innerer kreisförmiger Sitz (133) und ein zweiter äußerer ringförmiger Sitz (134) von dem ersten Ring (120) des Abstandselementes und der kreisförmigen Schulter (132) des Abstandselements (119) gebildet werden, und der Topf weiterhin einen zweiten Ring (126) umfaßt, der auf einer oberen Schaftoberfläche (125) des zweiten Schafts (118) des zweiten Behälterelements (117) aufruht.

6. Topf nach Anspruch 4 oder 5, dadurch gekennzeichnet, daß die Wasserfiltermittel von einem kreisförmigen gebohrten Trog (14, 114) gebildet werden, der in einer Stufe (13, 113) untergebracht ist, die an dem oberen Ende der Ausnehmung (4, 104) der Basis (2, 102) vorgesehen ist, wobei der äußere ringförmige Ansatz (23, 123) des Abstandselements (19, 119) weiterhin mit einem vorspringenden Abschnitt (24, 124) versehen ist, der sich etwa längs eines Viertels des Umfangs des ersten Rings (20, 120) erstreckt und eine im wesentlichen dreieckige Form aufweist.

7. Topf nach Anspruch 2, dadurch gekennzeichnet, daß das erste Behälterelement (207) einen L-förmigen Querschnitt mit einem oberen Stirnabschnitt (221) aufweist, das zweite Behälterelement (217) einen L-förmigen Querschnitt mit einem zweiten abgerundeten Abschnitt (239) und einem einen unteren Stirnabschnitt (222) bildenden zweiten Schaft (218) aufweist, das Abstandselement (219) von einem ringförmigen kreisförmigen Ring gebildet ist, der zwischen dem oberen Stirnabschnitt (221) und dem unteren Stirnabschnitt (222) eingesetzt ist, wenn das erste Behälterelement (207), das Abstandselement (219) und das zweite Behälterelement (217) zur Bildung des Topfes zusammengesetzt sind, daß der Topf weiterhin Klammern (227) aufweist, die starr Seitenwänden (228, 229) des ersten und zweiten Behälterelements (207, 217) mit Hilfe zweiter Bolzen (230a, 230b) zugeordnet sind, die in zweiten Buchsen (231a, 231b) aufgenommen sind, die Klammern (227) Ösen (236) mit durchgehenden Löchern aufweisen, durch die Bewegungshakenmittel (237) einsetzbar sind, für eine mindestens teilweise Bewegung des ersten und zweiten Behälterelements (207, 217) und des Abstandselements (219), und daß der Topf weiterhin Topfbewegungsmittel aufweist, die von einem Ringkopfbolzen (235) gebildet werden, der radial der Basis (202) unterhalb des ersten abgerundeten Abschnitts (215) des ersten Behälterelements (207) zugeordnet ist, wobei die Wasserfiltermittel von einem Gewebetuch (214) gebildet sind.

8. Topf nach einem der vorhergehenden Ansprüche, dadurch gekennzeichnet, daß das erste Behälterelement (7, 107, 207) und das zweite Behälterelement (17, 117, 217) identisch geformt und von der gleichen Form hergestellt sind.

Fig.4

Fig.3

Fig.5

Fig.6

Fig.2

Fig.1

EP 0 250 945 B1

Fig.8

Fig.7

Fig.9

Fig.10

Fig.11